# EUROPEAN PATENT SPECIFICATION

(11) **EP 2 056 232 B1**
(45) Date of publication and mention of the grant of the patent: **05.12.2012**
(21) Application number: 08167575.3
(22) Date of filing: 24.10.2008
(51) Int. Cl.: G06K 7/10, G06K 19/07, G06K 19/077, G06K 7/00

(54) **Passively transferrring radio frequency signals**
Passives Übertragen von Hochfrequenzsignalen
Transfert passif de signaux de fréquence radio

(30) Priority: 01.11.2007 US 933740
(43) Date of publication of application: 06.05.2009
(73) Proprietor: Sirit Inc., Toronto ON M5K 1N2 (CA)
(72) Inventor: Roesner, Bruce B., Durham, NC 27705 (US)
(74) Representative: Peterreins, Frank

(56) References cited:
- EP-A- 1 701 296
- WO-A-2004/107251
- US-A1- 2006 145 861

## Description

### TECHNICAL FIELD

This invention relates to detecting radio frequency signals and, more particularly, to passively transferring radio frequency signals.

### BACKGROUND

In some cases, an RFID reader operates in a dense reader environment, i.e., an area with many readers sharing fewer channels than the number of readers. Each RFID reader works to scan its interrogation zone for transponders, reading them when they are found. Because the transponder uses radar cross section (RCS) modulation to backscatter information to the readers, the RFID communications link can be very asymmetric. The readers typically transmit around 1 watt, while only about 0.1 milliwatt or less gets reflected back from the transponder. After propagation losses from the transponder to the reader the receive signal power at the reader can be 1 nanowatt for fully passive transponders, and as low as 1 picowatt for battery assisted transponders. At the same time other nearby readers also transmit 1 watt, sometimes on the same channel or nearby channels. Although the transponder backscatter signal is, in some cases, separated from the readers' transmission on a sub-carrier, the problem of filtering out unwanted adjacent reader transmissions is very difficult.

WO 2004/107251 A2 shows an RFID relay device for an RFID transponder and methods for relaying an RFID signal. The RFID relay device comprises at least two antenna and a transmission line coupling the at least two antenna. In addition to the two antenna and the transmission line, the RFID relay device comprises an impedance adjusting circuit coupled to the transmission line and configured for coupling to the RFID transponder.

EP 1 701 296 A 1 discloses in an RFID system including an RFID tag and an RFID reader for performing wireless communications with the RFID tag, an RFID relay antenna having a first loop antenna for electromagnetic induction coupling with an antenna at the RFID tag, a second loop antenna that is provided apart from the first loop antenna and for electromagnetic induction coupling with an antenna at the RFID reader, and wires for connecting the first loop antenna and the second loop antenna so as to form one closed loop and for conveying an induced current generated at the first and second loop antennas to the second and first loop antennas, respectively.

US Pub. No. 2006/0145861 A1 presents an RFID system including RFID tags and a transmission line. The RFID tags are mountable to items to be read and include an RFID circuit that generates tag energy when activated by activation energy from a reader. The transmission line carries activation energy from the reader and tag energy from the tags. The transmission line is positionable in operative or coupling proximately to a plurality of the tags when the plurality of the tags are mounted to items and when the items are stacked.

### SUMMARY

The present invention relates to a container according to claim 1. Preferred embodiments are described in the dependent claims.

The present disclosure is directed to a system and method for passively transferring Radio Frequency (RF) signals.

The details of one or more embodiments of the invention are set forth in the accompanying drawings and the description below. Other features, objects, and advantages of the invention will be apparent from the description and drawings, and from the claims.

### DESCRIPTION OF DRAWINGS

FIGURE 1 is a block diagram of a transfer system for passively transferring radio frequency signals;
FIGURE 2 is a block diagram illustrating an example container including energy transfer media;
FIGURE 3 is a block diagram illustrating a transfer paths in a transfer system;
FIGURE 4 is a block diagram illustrating an example energy transfer media;
FIGURES 5A-C are block diagram illustrating another example of energy transfer media; and
FIGURES 6A and 6B are flow charts illustrating example methods for passively transferring radio-frequency signals.
Like reference symbols in the various drawings indicate like elements.

### DETAILED DESCRIPTION

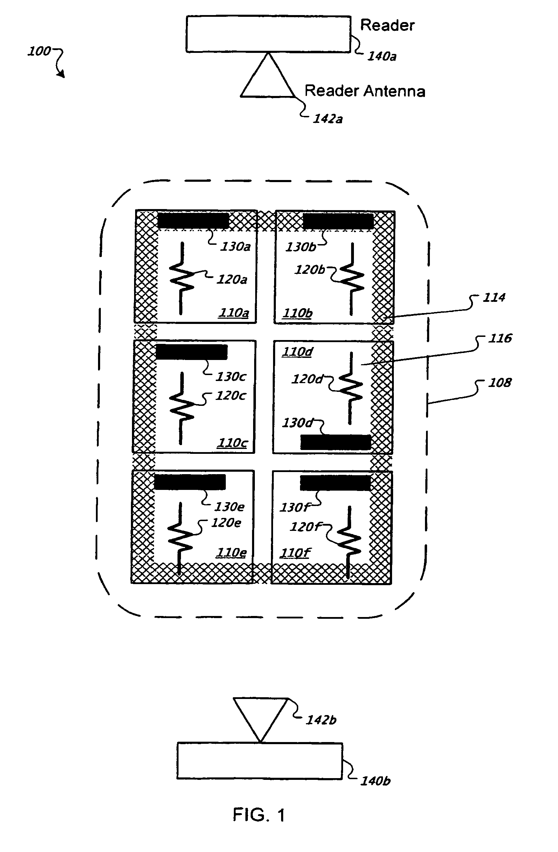

FIGURE 1 is a top-view block diagram illustrating an example system 100 for transferring energy in accordance with some implementations of the present disclosure. For example, the system 100 may passively transfer radio frequency signals to obstructed Radio Frequency IDentifiers (RFIDs). In some implementations, the system 100 may include goods at least partially in containers. In managing such goods, the system 100 may transmit RF signals to request information identifying these goods. In some cases, the RF signals may be attenuated by, for example, other containers, packaging, and/or other elements. For example, the system 100 may include containers with RFID tags that are stacked on palettes and are not located on the periphery. In this case, RF signals may be attenuated by other containers and/or material (e.g., water). In some implementations, the system 100 may passively transfer RF signals to tags otherwise obstructed. For example, the system 100 may include one or more antennas that passively transfers RF signals between interior tags and the periphery of a group of containers.
At a high level, the system 100 can, in some implementations, include a group 108 including containers 110a-f, energy-transfer media 120a-f, RFID tags 130a-f, and readers 140a-b. Each container 110 includes an associated RFID tag 130 that wirelessly communicates with the readers 140. In some cases, the RFID tag 130 may reside in an interior region 116 of the group 108 not at or proximate the periphery 114. In this case, the energy-transfer medium 120 may passively transfer RF signals between interior RFID tags 130 and the readers 140. In other words, the transmission path between reader 140 and interior tags 130 may include both wired and wireless connections. For example, the group 108 may be a shipment of produce, and the containers 110 may be returnable plastic containers (RPCs) or crates, which are commonly used worldwide to transport produce. In some cases, produce is composed primarily of water, which may significantly attenuate RF signals and interfere with RFID tags 130c-130fin the interior region 116 from directly receiving RF signals. In this example, the energy transfer media 120 may transmit RF signals between the periphery 114 and the interior region 116 enabling communication between the RFID readers 140 and the RFID tags 130a-f. The system 100 may allow the produce shipment to be tracked and/or inventoried more easily, since each RPC can be identified by RFID while the shipment is stacked or grouped. While the examples discussed in the present disclosure relate to implementing RFID in stacked or grouped containers, the system 100 may be useful in a variety of other implementations. In some examples, the system 100 may be applied to the top surface of pallets to allow communication with boxes stacked on the pallet. In some examples, the system 100 may be applied to cardboard boxes by placing the antennas on different surfaces and bending the transmission line around the corners.

Turning to a more detailed description of the elements, the group 108 may be any spatial arrangement, configuration and/or orientation of the containers 110. For example, the group 108 may include stacked containers 110 arrange or otherwise positioned on a palette for transportation. In some implementations, the group 108 may be a horizontal two-dimensional (2D) matrix (as illustrated), a vertical 2D matrix, a 3D matrix that extends vertically and horizontally, and/or a variety of other arrangements. The group 108 may arranged regardless of the orientation and/or location of the tags 130. The containers 110 may be any article capable of holding, storing or otherwise at least partially enclosing one or more assets (e.g., produce, goods). For example, the containers 110 may be RPCs including produce immersed in water. In some implementations, each container 110 may include one or more tags 130 and/or energy-transfer media 120. The tag 130 and/or the media 120 are integrated into the container 110 or affixed to the container 110. In some implementations, one or more of the containers 110 may not include a tag 130. In some implementations, the containers 110 may be of any shape or geometry that, in at least one spatial arrangement and/or orientation of the containers 110, facilitates communication between one or more of the following: tags 130 of adjacent containers 110, energy transfer media 120 of adjacent containers 110, and/or between tags 130 and energy transfer media 120 of adjacent containers. For example, the geometry of the containers 110 may include right angles (as illustrated), obtuse and/or angles, rounded corners and/or rounded sides, and a variety of other features. In some implementations, the containers 110 may be formed from or otherwise include one or more of the following: cardboard, paper, plastic, fibers, wood, and/or other materials. In some implementations, the geometry and/or material of the containers 110 may vary among the containers 110 in the group 108.

The energy transfer media 120 can include any software, hardware, and/or firmware configured to transfer radio frequency signals from one location to another. For example, the media 120 may include material configured to passively transfer radio frequency signals between two locations. In some implementations, the media 120 may wirelessly receive an RF signal at one portion (e.g., first antenna) and re-emit the signal from a different portion of the media 120 (e.g., second antenna). The media 120 can, in some implementations, receive signals from or transmit signals to the RFID antennas 142, the RFID tags 130, and/or other energy-transfer media 120. For example, the RFID reader 140 may transmit an RF signal incident the periphery 114, and the media 120 may receive and re-transmit the signal to an interior tag 130. In some implementations, the media 120 can be at least a portion of a communication path between the RFID reader 140 and the RFID tag 130. For example, the media 120 may transfer RF signals between the periphery 114 and the interior 114 of the group 108. In doing so, the media 120 may establish communication paths to tags 130 otherwise unable to directly communicate with the reader 140. In some implementations, the media 120 may include one or more of the following: conductive wires and/or transmission lines, antennas, plates for capacitive coupling, coils for inductive coupling, and/or any other features that passively transfer RF signals. For example, the energy transfer media 120 may include antennas and conducting lines made of copper and/or other conductive materials. In this examples, the antennas wirelessly receive and transmit RF signals and the conducting lines transfer incident RF signals between antennas. The energy transfer media 120 may be designed to couple to electric fields at frequencies such as UHF (400 MHz to 1 GHz) or magnetic fields at lower frequencies such as 10 kHz to 100 MHz. The energy transfer media 120 may be fabricated separately from and later attached or otherwise affixed to the container 110. For example, the energy transfer media 120 may be a printed pattern applied externally to a container 110. The energy transfer media 120 may be integrated into at least a portion of the container 110. For example, the container 110 may be an RPC with an energy transfer medium 120 built into its structure. The energy transfer media 120 may include a variety of geometries, placements and/or orientations with respect to the tags 130 and/or containers 110. For example, the energy transfer media 120 may bend or curve around or through any interior or exterior feature of the container 110, such as corners, edges and/or sides. In some implementations, the media 120 includes directional antennas configured to, for example, increase transmission efficiency. In some implementations, the media 120 may be, for example, approximately six inches, 14 inches, and/or other lengths.

The RFID tags 130 can include any software, hardware, and/or firmware configured to backscatter RF signals. The tags 130 may operate without the use of an internal power supply. Rather, the tags 130 may transmit a reply to a received signal using power stored from the previously received RF signals independent of an internal power source. This mode of operation is typically referred to as backscattering. The tags 130 can, in some implementations, receive signals from or transmit signals to the RFID antennas 142, energy transfer media 120, and/or other RFID tags 130. In some implementations, the tags 130 can alternate between absorbing power from signals transmitted by the reader 140 and transmitting responses to the signals using at least a portion of the absorbed power. In passive tag operation, the tags 130 typically have a maximum allowable time to maintain at least a minimum DC voltage level. In some implementations, this time duration is determined by the amount of power available from an antenna of a tag 130 minus the power consumed by the tag 130 to charge the on-chip capacitance. The effective capacitance can, in some implementations, be configured to store sufficient power to support the internal DC voltage when the antenna power is disabled. The tag 130 may consume the stored power when information is either transmitted to the tag 130 or the tag 130 responds to the reader 140 (e.g., modulated signal on the antenna input). In transmitting responses, the tags 130 may include one or more of the following: an identification string, locally stored data, tag status, internal temperature, and/or others.

The RFID readers 140 can include any software, hardware, and/or firmware configured to transmit and receive RF signals. In general, the RFID reader 140 may transmit request for information within a certain geographic area, or interrogation zone, associated with the reader 140. The reader 140 may transmit the query in response to a request, automatically, in response to a threshold being satisfied (e.g., expiration of time), as well as others events. The interrogation zone may be based on one or more parameters such as transmission power, associated protocol, nearby impediments (e.g., objects, walls, buildings), as well as others. In general, the RFID reader 140 may include a controller, a transceiver coupled to the controller (not illustrated), and at least one RF antenna 142 coupled to the transceiver. In the illustrated example, the RF antenna 142 transmits commands generated by the controller through the transceiver and receives responses from RFID tags 130 and/or energy transfer media 120 in the associated interrogation zone. In certain cases such as tag-talks-first (TTF) systems, the reader 140 may not transmit commands but only RF energy. In some implementations, the controller can determine statistical data based, at least in part, on tag responses. The readers 140 often includes a power supply or may obtain power from a coupled source for powering included elements and transmitting signals. In some implementations, the reader 140 operates in one or more of frequency bands allotted for RF communication. For example, the Federal Communication Commission (FCC) have assigned 902-928 MHz and 2400-2483.5 MHz as frequency bands for certain RFID applications. In some implementations, the reader 140 may dynamically switch between different frequency bands.

In one aspect of operation, the reader 140 periodically transmits signals in the interrogation zone. In the event that the transmitted signal reaches a tag 130, the passive tag 130 processes the signal and stores at least a portion of the power of the received signal. The passive tag 130 then uses the stored power to operate elements including transmitting a response to the reader 140 and, in some implementations, retransmitting the received signal. In the event that the signal (transmitted by either the reader 140 or the tag 130) reaches an energy transfer medium 120, the energy transfer medium 120 retransmits the received signal at a different position in the container 110. The signal transmitted by the energy transfer medium 120 may then be received by another energy transfer medium 120, a tag 130, or a reader 140.

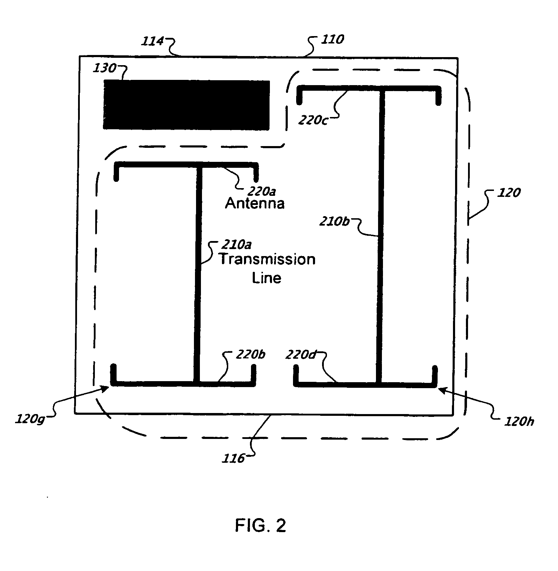

FIGURE 2 illustrates a top view of an example container 110 of FIGURE 1 in accordance with some implementations of the present disclosure. In particular, the illustrated container 110 includes an RFID tag 130 and energy transfer media 120. In some implementations, the media 120 enables RFID reader 140 to communicate with and provide power to the RFID tag 130 when the tag 130 is not directly exposed to the fields emitted by an RFID antenna 142.

In the illustrated implementation, the container 110 includes a single RFID tag 130 and two energy transfer media 120g and 120h. The container 110 may include some, all, additional, or different elements without departing form the scope of this disclosure. For example, the container may include a different number of tags 130 and/or a different number and/or arrangement of energy transfer media 120. Each illustrated energy transfer medium 120 includes a transmission line 210 and two antennas 220. The transmission line 210 can, in some implementations, passively transfer RF signals from one portion of the container 110 to a different portion of a container. For example, the transmission line 210 may transfer RF signals from one side to a different side of the container 110. In the illustrated implementation, the tag 130 can receive RF signals from and/or transmit RF signals to the antenna 220a. For example, the transmission line 210a may transfer RF signals incident the antenna 220b to the antenna 220a for re-transmission to the tag 130. In some implementations, the antenna 220c can be coupled to an antenna 220 and/or a tag 130 of an adjacent container 110 (not illustrated). The antenna 220b and/or 220d may be coupled to an antenna 220, a tag 130 of an adjacent container 110, and/or a reader 140 (not illustrated).

In one aspect of operation, the RFID antenna 142 may transmit a request for information incident the periphery 114. The antennas 220b and 220d may receive the incident RF signal and passively transfer the signal to the corresponding transmission line 210. The transmission lines 210a and 210b may transmit the RF signal to the corresponding antenna 220 located at least proximate the interior region 116 of the group 108. The antenna 220a wirelessly transmits the RF signal to the RF tag 130, and the antenna 220c re-transmits the RF signal in the interior region 116. The tag 130 may transmits the response to the antenna 220a, and the response is transmitted down the transmission line 210a to the antenna 220b. The antenna 220b may wirelessly transmit the response to the reader 140. The antenna 220c may receive RF signals from the interior region 116, and the transmission line 210b may transmit the RF signals to the antenna 220d. The antenna 220d may then re-transmit the signals for detection by the RF reader 140.

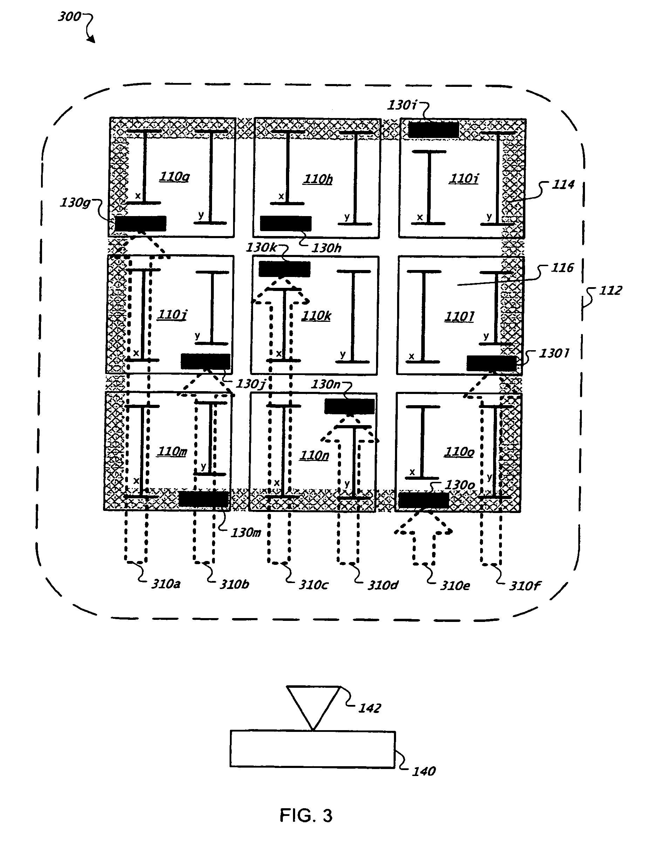

FIGURE 3 illustrates the top view of an example system 300 using the energy transfer media 120 illustrated in FIGURE 2. The group 108 includes nine containers 110g-110o arranged in a 3x3 horizontal matrix. The containers 110g-110o include RFID tags 130g-130o, and each container 110 includes transfer media 120x and 120y. The arrows 310a-310f illustrate six example transmission paths between the RFID reader 140 and RFID tags 130.

In the illustrated example, the RFID reader 140 may communicate directly with the tags 130 located on the periphery 114 such as tags 130m and 130o_{.} The RFID reader 140 may indirectly communicate with the tags 130 located in the interior 116 of the group 108 using the transfer media 120 and/or other tags 130. For example, the transmission path 310a illustrates that the reader 140 may transmit a request incident the transfer media 120x of the container 110m. In this example, the transfer media 120x re-transmits the RF signal to the transfer media 120x of the container 110j, which re-transmits the RF signal to the tag 130g. In passively transferring the RF signal, the RF signal may be attenuated by the transfer media 120 and/or intermediate tags 130. For example, the system 300 may operate in accordance with one or more of the following: antenna and tags are 100% efficient; tags and antennas in close proximity share 50% of the energy; transfer efficiency is 80%; coupling efficiency between antennas is 30% (improved with directional antenna); coupling efficiency of antenna and tag is 30% (improved with directional antenna; and/or other properties. For example, the transmission path 310a may have a power efficiency of 6%. In the regards to other transmission paths, the RFID reader 142 may communicate with: tag 130g energy transfer medium 120x of container 110m and 120x of container 110j; tag 130k using energy transfer media 120x of container 110n and 120x of container 110k; tag 130n using energy transfer medium 120y of container 110n; and/or tag 1301 using energy transfer medium 120y of container 110o. The paths 310 merely illustrate example transmission paths, and the system 300 may include some, none, all, or different transmission paths 310 without departing from the scope of this disclosure.

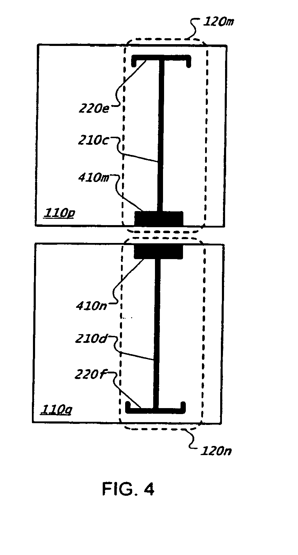

FIGURE 4 illustrates the top view of example containers 110 of FIGURE 1 in accordance with some implementations of the present disclosure. In particular, RF signals are transferred using parallel capacitance plates 410m and 410n. Each illustrated container 110p and 110q includes energy transfer media 120m and 120n, which, as previously mentioned, may allow the RFID reader 140 to passively transfer signals and/or power to one or more RFID tags 130. The containers 110m and 110n may include some, all, additional, or different elements without departing form the scope of this disclosure. For example, the container 110 may include one or more tags 130 and/or a different number and/or configuration of energy transfer media 120.

In the illustrated implementation, each energy transfer medium 120 includes a transmission line 210, an antenna 220, and a parallel capacitance plate 410. A tag 130 and/or an antenna 220 of an adjacent (not-illustrated) container 110 may be coupled to the antenna 220. In some implementations, the antenna 220f is situated in the periphery 114 of the group 108 and transmits signals to and/or receives signals from the RFID reader 140. Such signals may be transmitted between containers 110p and 110q using capacitive coupling of the parallel capacitance plates 410a and 410b.

In one aspect of operation, the antenna 220f receives an RF signal from the reader 140 and passes the signal to the transmission line 210d. The transmission line 210d transfer the RF signal to the capacitance plate 410m, which capacitively transfers the RF signal to the plate 410n. The plate 410n passes the RF signal to the transmission line 210c. The antenna 120m re-transmits the signal to other antenna 120 and/ tags 130 (not illustrated). In addition, the energy transfer media 120m and 120n may receive replies from the tag 130 and re-transmit the replies to the reader 140.

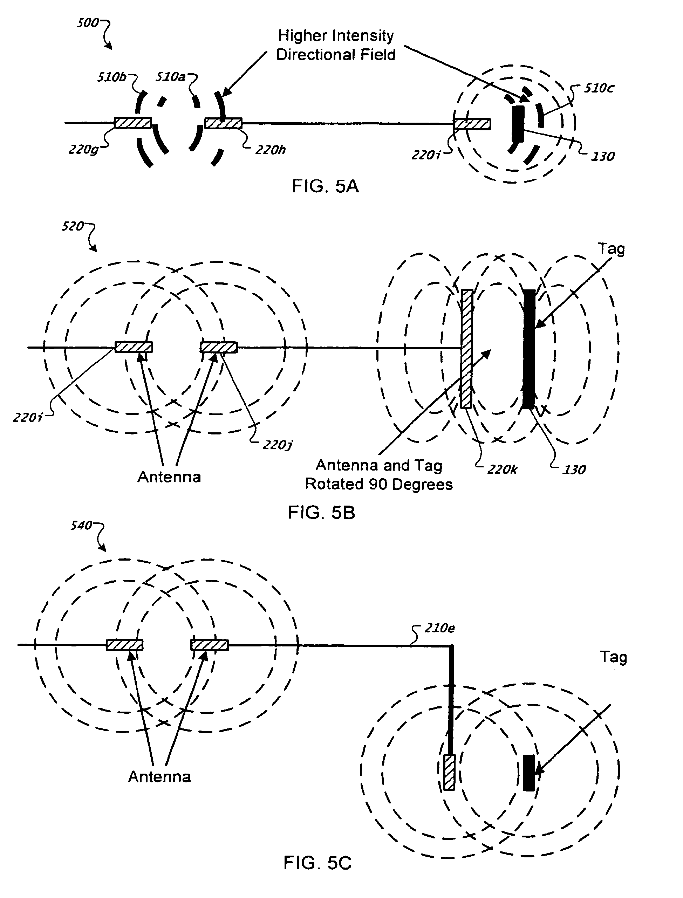

FIGURES 5A-C illustrate example configurations of antennas 220 and tags 130 in accordance with some implementations of the present disclosure. FIGURE 5A illustrates an example implementation 500 including directional antennas in the energy transfer media 120. In some implementations, directional antennas may maximize, enhance or otherwise increase the energy transfer efficiency of, for example, the system 100. The efficiency of coupling between an energy transfer medium 120 and an adjoining device (e.g. a tag 130, a reader antenna 140, another energy transfer medium 120) may be increased, in some implementations, when the energy transfer medium antenna 220 receives and/or transmits energy directionally using the directional antennas 220g-h. The directionality of each antenna 220 is illustrated the signal lines 510a-c. The antenna 220g is configured to transmit and receive in the direction of antenna 220h, as illustrated by the signal lines 510a. The antenna 220h is configured to transmit and receive in the direction of antenna 220g, as illustrated by the signal lines 510b. The antenna 220i is configured to transmit and receive in the direction of tag 130, as illustrated by the signal lines 510c.

FIGURE 5B illustrates an example implementation 520 having a different configuration of antennas 220 and tag 130. In this implementation, the orientation of the antenna 220k is rotated by 90 degrees, and the coupling efficiency of this configuration may be maximized, enhanced, or otherwise increase the energy transfer between the antenna 220k and the tag 130. FIGURE 5C illustrates another example implementation 540 of an energy transfer medium 120 configured to bend around a corner of a container 110. The transmission line 210e in the illustrated example deviates from a straight line (e.g., 90 degree turn), which could, for example, accommodate the corner or edge of the container 110. In some implementations, by substantially tracing the geometry of the containers 110, the versatility and/or performance of, for example, the system 100 may be improved.

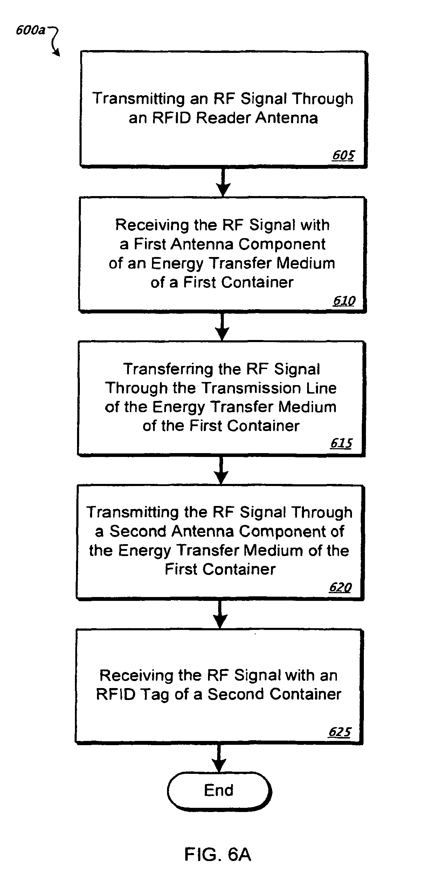

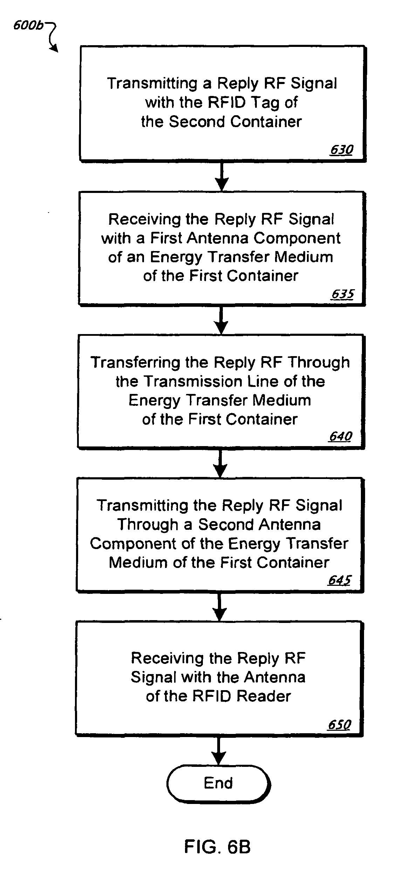

FIGURES 6a and 6b are flow charts illustrating example methods 600a and 600b for managing a system 100 of FIGURE 1. In particular, the example methods 600a and 600b describe techniques for communicating along the path 310f of FIGURE 3 between the tag 1301 and the RFID reader 140b. Example method 600a describes a technique for sending an RF signal from the reader 140b to the tag 1301 along the path 310f, and example method 600b describes a technique for sending a reply RF signal from the tag 130f to the reader 140b along the path 310f. The methods 600a and 600b are example methods for one aspect of operation of the system 100; a similar method, including the some, all, additional, or different steps, consistent with the present disclosure, may be used to manage the system 100.

Method 600a begins at step 605, where an RF signal is transmitted from an RFID reader through an RFID reader antenna. Next in step 610, the RF signal is received by a first antenna component of an energy transfer medium of a first container. In step 615, the RF signal is transferred through a transmission line of the energy transfer medium. In step 620, the RF signal is transmitted by a second antenna component of the energy transfer medium of the first container. In step 625, the RF signal is received by an RFID tag in a second container.

Method 600b begins at step 630, where the RFID tag in the second container transmits a reply RF signal. Next in step 635, the reply RF signal is received by the second antenna component of the energy transfer medium of the first container. In step 640, the reply RF signal is transferred through the transmission line of the energy transfer medium, and in step 645 the reply RF signal is transmitted by the first antenna component of the energy transfer medium of the first container. Finally, in step 650, the reply RF signal is received by the RFID reader antenna and may be processed by the RFID reader.

A number of embodiments of the invention have been described. Nevertheless, it will be understood that various modifications may be made without departing from the spirit and scope of the invention. Accordingly, other embodiments are within the scope of the following claims.

## Claims

1. A container (110; 110a-110o), comprising:
a Radio Frequency Identification (RFID) tag (130; 130a-130o) proximate a first portion of the container (110; 110a-110o); and
a transfer element (120; 120a-120f; 120g) integrated into or affixed to the container (110; 110a-110o) and configured to wirelessly receive RF signals and passively transfer the RF signals between the first portion of the container (110; 110a-110o) proximate the RFID tag (130; 130a-130o) to a different portion of the container (110; 110a-110o); the transfer element (120; 120a-120f; 120g) comprising:
a first antenna (220; 220a) proximate the RFID tag (130; 130a-130o) and configured to wirelessly communicate with the RFID tag (130; 130a-130o);
a second antenna (220; 220b); and
a transmission section (210a) connected to the first antenna (220; 220a) at a first end and configured to passively pass RF signals between the first antenna (220; 220a) and the second antenna (220; 220b), the second antenna (220; 220b) being connected to a second end of the transmission section (210a) and proximate the different portion of the container (110; 110a-110o) and configured to wirelessly re-transmit RF signals received from the transmission section (210a) and pass incident wireless RF signals to the transmission section (210a),
**characterized in that** the RFID tag (130; 130a-130o) is integrated into or affixed to the container (110; 110a-110o).

2. The container (110; 110a-110o) of claim 1, wherein the container (110; 110a-110o) includes a second transfer element (120; 120a-120f; 120h) integrated into or affixed to the container (110; 110a-110o), wherein a first antenna (220; 220c) of the second transfer element (120; 120a-120f; 120h) is configured to couple to an antenna (220) and/or RFID tag (130; 130a-130o) of a second container (110; 110a-110o) adjacent to the container (110; 110a-110o) and/or a second antenna (220; 220d) is configured couple to an antenna (220) and/or RFID tag (130; 130a-130o) of a third container (110; 110a-110o) adjacent to the container (110; 110a-110o) and/or to a reader (140).

3. The container (110; 110o - 110o) of claim 1 or 2, wherein the RFID tag (130; 130a-130o) is a passive RFID tag (130; 130a-130o).

4. The container (110; 110a - 110o) of claim 3, wherein the first antenna (220; 220a; 220c) and the second antenna (220; 220b; 220d) comprise a first directional antenna and a second directional antenna.

5. The container (110; 110a - 110o) of claims 1 or 2, wherein the container (110; 110a - 110o) is included in a plurality of containers (110; 110a - 110o) that includes a periphery (114) and an interior region (116) that substantially interferes with wirelessly RF signals, the first portion of the container (110; 110a - 110o) in the interior region (116), second portion of the container (110; 110a - 110o) at the periphery (114).

6. The container (110; 110a - 110o) of claims 1 or 2, wherein the container (110; 110a - 110o) comprises a Returnable Plastic Container (RPC).

7. The container (110; 110a - 110o) of claims 1 or 2, wherein the transfer element (120; 120a-120f; 120g; 120h) is 0.1524 meters [6 inches] or greater.

## Patentansprüche

1. Behälter (110; 111a- 110o), umfassend:
einen RFID-Transponder (130; 130a-130o) in der Nähe eines ersten Teils des Behälters (110; 110a-110o); und
ein Übertragungselement (120; 120a-120f; 120g) intergriert in den oder befestigt an dem Behälter (110; 110a-110o) und ausgelegt, um drahtlos Hochfrequenzsignale zu empfangen und passiv Hochfrequenzsignale von dem ersten Teil des Behälters (110; 110a-110o) in der Nähe des RFID-Transponders (130; 130a-130o) an einen anderen Teil des Behälters (110; 110a-110o) zu übertragen; wobei das Übertragungselement (120; 120a-120f; 120g) umfasst:
eine erste Antenne (220; 220a) in der Nähe des RFID-Transponders (130; 130a-130o) und ausgelegt, um drahtlos mit dem RFID-Transponder (130; 130a-130o) zu kommunizieren;
eine zweite Antenne (220; 220b); und
einen Übertragungsbereich (210a) verbunden mit der ersten Antenne (220; 220a) an einem ersten Ende und ausgelegt, um passiv Hochfrequenzsignale zwischen der ersten Antenne (220; 220a) und der zweiten Antenne (220; 220b) zu leiten, wobei die zweite Antenne (220; 220b) mit einem zweiten Ende des Übertragungsbereichs (210a) verbunden ist und sich in der Nähe eines anderen Teils des Behälters (110; 110a-110o) befindet und ausgelegt ist, um drahtlos Hochfrequenzsignale, die von dem Übertragungsbereich (210a) empfangen wurden, zurückzuübertragen und einfallende drahtlose Hochfrequenzsignale an den Übertragungsbereich (210a) zu leiten, **gekennzeichnet dadurch,**
**dass** der RFID-Transponder (130; 130a-130o) in den Behälter (110; 110a-110o) integriert ist oder an dem Behälter (110; 110a-110o) befestigt ist.

2. Behälter (110; 110a-110o) gemäß Anspruch 1, wobei der Behälter (110; 110a-110o) ein zweites Übertragungselement (120; 120a-120f; 120h) umfasst, das in dem Behälter (110; 110a-110o) integriert ist oder an dem Behälter (110; 110a-110o) befestigt ist, wobei eine erste Antenne (220; 220c) des zweiten Übertragungselements (120; 120a-120f; 120h) ausgelegt ist, um mit einer Antenne (220) und/oder einem RFID-Transponder (130; 130a-130o) eines zweiten Behälters (110; 110a-110o) verbunden zu werden benachbart zu dem Behälter (110; 110a-110o) und/oder eine zweite Antenne (220; 220d) ausgelegt ist, um mit einer Antenne (220) und/oder einem RFID-Transponder (130; 130a-130o) eines dritten Behälters (110; 110a-110o) verbunden zu werden benachbart zu dem Behälter (110; 110a-110o) und/oder mit einem Lesegerät (140).

3. Behälter (110; 110a-110o) gemäß Anspruch 1 oder 2, wobei der RFID-Transponder (130; 130a-130o) ein passiver RFID-Transponder (130; 130a-130o) ist.

4. Behälter (110; 110a-110o) gemäß Anspruch 3, wobei die erste Antenne (220; 220a; 220c) und die zweite Antenne (220; 220b; 220d) eine erste gerichtete Antenne und eine zweite gerichtete Antenne umfassen.

5. Behälter (110; 110a-110o) gemäß Anspruch 1 oder 2, wobei der Behälter (100) einer einer Mehrzahl von Behältern (110) ist, die einen Außenbereich (114) und einen inneren Bereich (116), der erheblich mit drahtlosen Hochfrequenzsignalen iterferiert, umfasst, wobei der erste Teil des Behälters (100) sich im inneren Bereich (116) und der zweite Teil des Behälters (100) sich im Außenbereich (114) befindet.

6. Behälter (110; 110a-110o) gemäß Anspruch 1 oder 2, wobei der Behälter (100) einen wiederverwendbaren Kunststoffbehälter [Returnable Plastic Container] umfasst.

7. Behälter (110; 110a-110o) gemäß Anspruch 1 oder 2, wobei das Übertragunsgelement (120; 120a-120f; 120g; 120h) 0,1524 m [6 Inch] oder länger ist.

## Revendications

1. Conteneur (110 ; 110a-110o) comprenant :
une étiquette d'identification par radiofréquence (RFID) (130 ; 130a-130o) à proximité d'une première partie du conteneur (110 ; 110a-110o) ; et
un élément de transfert (120 ; 120a-120f ; 120g) intégré dans le, ou fixé au, conteneur (110 ; 110a-110o) et configuré pour recevoir sans fil des signaux RF et transférer passivement les signaux RF entre la première partie du conteneur (110 ; 110a-110o) à proximité de l'étiquette RFID (130 ; 130a-130o) et une partie différente du conteneur (110 ; 110a-110o) ; l'élément de transfert (120 ; 120a-120f; 120g) comprenant :
une première antenne (220 ; 220a) à proximité de l'étiquette RFID (130 ; 130a-130o) et configurée pour communiquer sans fil avec l'étiquette RFID (130 ; 130a-130o) ;
une seconde antenne (220 ; 220b) ; et
une section de transmission (210a) connectée à la première antenne (220 ; 220a) à une première extrémité et configurée pour faire passer de manière passive les signaux RF entre la première antenne (220 ; 220a) et la seconde antenne (220 ; 220b), la seconde antenne (220 ; 220b) étant connectée à une seconde extrémité de la section de transmission (210a) et à proximité de la partie différente du conteneur (110 ; 110a-110o) et configurée pour retransmettre sans fil des signaux RF reçus de la section de transmission (210a) et faire passer des signaux RF incidents sans fil à la section de transmission (210a),
**caractérisé en ce que** l'étiquette RFID (130 ; 130a-130o) est intégrée dans le, ou fixée au, conteneur (110 ; 110a-110o).

2. Conteneur (110 ; 110a-110o) selon la revendication 1, dans lequel le conteneur (110 ; 110a-110o) comprend un second élément de transfert (120 ; 120a-120f; 120h) intégré dans le, ou fixé au, conteneur (110 ; 110a-110o), dans lequel une première antenne (220 ; 220c) du second élément de transfert (120 ; 120a-120f ; 120h) est configurée pour se coupler à une antenne (220) et/ou une étiquette RFID (130 ; 130a-130o) d'un deuxième conteneur (110 ; 110a-110o) adjacent au conteneur (110 ; 110a-110o) et/ou une seconde antenne (220 ; 220d) est configurée pour se coupler à une antenne (220) et/ou une étiquette RFID (130 ; 130a-130o) d'un troisième conteneur (110 ; 110a-110o) adjacent au conteneur (110 ; 110a-110o) et/ou à un lecteur (140).

3. Conteneur (110 ; 110a-110o) selon les revendications 1 ou 2, dans lequel l'étiquette RFID (130 ; 130a-130o) est une étiquette RFID (130 ; 130a-130o) passive.

4. Conteneur (110 ; 110a-110o) selon la revendication 3, dans lequel la première antenne (220 ; 220a ; 220c) et la seconde antenne (220 ; 220b ; 220d) comprennent une première antenne directionnelle et une seconde antenne directionnelle.

5. Conteneur (110 ; 110a-110o) selon les revendications 1 ou 2, dans lequel le conteneur (110 ; 110a-110o) est inclus dans une pluralité de conteneurs (110 ; 110a-110o) qui comprend une périphérie (114) et une région intérieure (116) qui interfère sensiblement avec les signaux RF sans fil, la première partie du conteneur (110 ; 110a-110o) dans la région intérieure (116), la seconde partie du conteneur (110 ; 110a-110o) à la périphérie (114).

6. Conteneur (110 ; 110a-110o) selon les revendications 1 ou 2, dans lequel le conteneur (110 ; 110a-110o) comprend un conteneur en plastique réutilisable (RPC).

7. Conteneur (110 ; 110a-110o) selon les revendications 1 ou 2, dans lequel l'élément de transfert (120 ; 120a-120f ; 120g ; 120h) a une dimension de 0,1524 mètre (6 pouces) ou plus.
